# EUROPÄISCHE PATENTSCHRIFT

(11) **EP 1 852 643 B1**
(45) Veröffentlichungstag und Bekanntmachung des Hinweises auf die Patenterteilung: **17.07.2013**
(21) Anmeldenummer: 07007373.9
(22) Anmeldetag: 11.04.2007
(51) Int. Cl.: F16L 3/12, F16L 3/123

(54) **Schelle zum Befestigen eines rohr- oder schlauchförmigen Gegenstandes**
Bracket for attaching a tubular or hose-shaped object
Collier destiné à la fixation d'un objet tubulaire

(30) Priorität: 03.05.2006 DE 102006020407
(43) Veröffentlichungstag der Anmeldung: 07.11.2007
(73) Patentinhaber: NORMA Germany GmbH, 63477 Maintal (DE)
(72) Erfinder: Geppert, Helmut, 63791 Karlstein (DE); Schmidt, Frank, 63505 Langenselbold (DE); Sommer, Michael, 63654 Büdingen (DE)
(74) Vertreter: Knoblauch, Andreas

(56) Entgegenhaltungen:
- CA-A- 651 497
- DE-A1- 3 804 996
- DE-U1-202004 013 043
- GB-A- 589 319
- US-A- 2 338 006
- US-A- 3 906 592

## Beschreibung

Die Erfindung betrifft eine Schelle zum Befestigen eines rohr- oder schlauchförmigen Gegenstandes an einer Unterlage, wobei die Schelle einen Schellenmantel aufweist, von dessen einem Ende ein erster Schenkel und von dessen anderem Ende ein zweiter Schenkel absteht, wobei im geöffneten Zustand der erste Schenkel mindestens eine in Richtung auf den zweiten Schenkel herausstehende Lasche aufweist und der zweite Schenkel einen Befestigungsabschnitt aufweist, der in eine Lücke zwischen der Lasche und einem der Lasche gegenüberliegenden Nachbarbereich des ersten Schenkels einführbar ist, und im geschlossenen Zustand die Lasche plastisch auf die vom ersten Schenkel abgewandte Außenseite des Befestigungsabschnitts umgeformt ist.

Eine derartige Schelle ist beispielsweise aus CA 651 497 A bekannt. Die Schelle weist einen ringförmig gebogenen Schellenmantel auf, von dessen einem Ende ein erster Schenkel und von dessen anderem Ende ein zweiter Schenkel absteht. Der erste Schenkel ist an seinem Ende mit einer umgebogenen Lasche versehen, die in Richtung auf den zweiten Schenkel hervorsteht. Der zweite Schenkel weist einen Befestigungsabschnitt auf, der durch eine Öffnung im ersten Schenkel einführbar ist. An seinem Ende weist der zweite Schenkel ebenfalls eine abgebogene Lasche auf, die unter die Lasche am ersten Schenkel zu liegen kommt und festgehalten wird, wenn die Lasche am ersten Schenkel umgebogen wird. Wenn der Befestigungsabschnitt durch die Öffnung im ersten Schenkel geführt wird, dann drückt er einen abgebogenen Abschnitt, der auf der der Lasche gegenüberliegenden Seite des zweiten Schenkels angeordnet ist, zur Seite, so dass mit dem Eindrücken des Befestigungsabschnitts in die Öffnung gleichzeitig eine Befestigung der Schelle an einem Wandelement erreicht werden kann.

Eine weitere Schelle ist beispielsweise aus DE 38 08 334 C1 bekannt. Der Schellenmantel ist C-förmig gebogen und umschließt einen Aufnahmeraum, in den man ein Rohr, einen Schlauch oder dergleichen einlegen kann. Die beiden Schenkel werden dann aufeinandergelegt, so dass man die Schelle mit dem darin befindlichen Rohr, Schlauch oder dergleichen an einer Unterlage, beispielsweise einem Träger, einer Decke, einer Wand, einem Gehäuse oder dergleichen, befestigen kann. Die beiden Schenkel weisen dabei übereinstimmende Durchgangslöcher auf, durch die ein Befestigungselement, beispielsweise eine Schraube, geführt werden kann.

Um die Schelle bereits vor der Montage an der Unterlage auf dem rohr- oder schlauchförmigen Gegenstand befestigen zu können, kann man die bekannte Schelle vorfixieren. Hierzu weist die Schelle eine Verriegelungseinrichtung auf. Die Verriegelungseinrichtung weist an einem Schenkel eine S-förmig umgebogene und federnde Lasche auf, hinter der der andere Schenkel mit seiner freien Stirnseite einrasten kann. Nach dem Verrasten der Laschen liegt der Schellenmantel unter einer gewissen Vorspannung am rohr- oder schlauchförmigen Gegenstand an, so dass die Schelle auf diesem Gegenstand weder verdreht noch axial verschoben werden kann.

Diese Schelle hat sich für viele Anwendungsbereiche bewährt. In einigen Fällen tritt jedoch das Problem auf, dass die Verriegelung gelöst wird, wenn man beispielsweise beim Transport des rohr- oder schlauchförmigen Gegenstandes mit vormontierter Schelle irgendwo hängen bleibt. In diesem Fall kann die vormontierte Schelle ihre Lage oder Ausrichtung auf dem rohr- oder schlauchförmigen Gegenstand ändern.

DE 38 04 996 A1 beschreibt eine Klammer zum Einlegen und Befestigen von Rohren mit geringem Durchmesser. Die Klammer weist einen ringförmig gebogenen Schellenmantel auf, von dessen einem Ende ein erster Schenkel und von dessen anderem Ende ein zweiter Schenkel absteht. Der erste Schenkel ist deutlich länger als der zweite Schenkel. Der dadurch gebildete Überstand kann auf den zweiten Schenkel zurück gebogen werden.

US 3 906 592 A zeigt eine Klammer zum Festhalten von zwei Rohren mit einem Schellenmantel, der an seinen beiden Enden mit jeweils einem Schenkel versehen ist. Einer der Schenkel weist an seinem Ende einen Vorsprung und der andere Schenkel weist an seinem Ende eine Rastnase auf, die hinter dem Vorsprung einrasten kann.

GB 589 319 A zeigt eine Klammer zum Zusammenhalten mehrer Kabel oder dergleichen. Die Klammer weist an ihren Enden eine Zunge und einen Clip auf, wobei die Zunge durch einen Haken geführt werden kann, um dort befestigt zu werden.

DE 20 2004 013 043 U1 zeigt eine Schlauchschelle mit einem Schellenmantel, der an seinen beiden Enden mit Schenkeln versehen ist. Der erste Schenkel weist eine Durchgangsöffnung auf. Der zweite Schenkel weist eine zylindrische Ausformung auf, die in Richtung auf den ersten Schenkel gerichtet ist und, wenn die beiden Schenkel aneinander anliegen, durch die Durchgangsöffnung hindurchgeführt werden kann. Diese zylinderförmige Ausformung kann dann nach Art eines Niets auf die Außenseite des ersten Schenkels umgeformt werden.

US 2 338 006 A zeigt eine weitere Schelle, deren beide Schenkel dadurch vorpositioniert werden können, dass der eine Schenkel hinter einer Nase verhakt werden kann, die am anderen Schenkel ausgebildet ist.

Der Erfindung liegt die Aufgabe zugrunde, eine Schelle zuverlässig vormontieren zu können.

Diese Aufgabe wird bei einer Schelle der eingangs genannten Art dadurch gelöst, dass der Nachbarbereich ebenfalls als Lasche ausgebildet ist, die aus dem ersten Schenkel in Richtung auf den zweiten Schenkel heraussteht und im geschlossenen Zustand plastisch auf die Außenseite des Befestigungsabschnitts umgeformt ist.

Mit dieser Ausgestaltung wird eine wesentlich größere Sicherheit gegen ein versehentliches Lösen der Vorfixierung erreicht. In diesem Zusammenhang soll bemerkt werden, dass der "geöffnete Zustand" einen Zustand der Schelle beschreibt, in dem die Schelle noch nicht auf dem Gegenstand vorfixiert ist, die beiden Schenkel also einen Abstand zueinander aufweisen dergestalt, dass der vom Schellenmantel umgebene Aufnahmeraum einen größeren Querschnitt als der Gegenstand hat. Der "geschlossene Zustand" ist hingegen ein Zustand, in dem die beiden Schenkel aneinander fixiert sind, so dass der vom Schellenmantel umgebene Aufnahmeraum so an den Gegenstand angepasst ist, dass der Schellenmantel mit einer gewissen Vorspannung am Gegenstand anliegt. Dadurch, dass die Lasche plastisch auf den Befestigungsabschnitt umgeformt ist, kann sie nicht durch eine federnde Bewegung gelöst werden. Bereits diese Maßnahme erhöht die Sicherheit gegen ein versehentliches Lösen der Vorfixierung. Hinzu kommt, dass der Befestigungsabschnitt durch eine Lücke zwischen der Lasche und dem Nachbarbereich geführt worden ist, wenn sich die Schelle im geschlossenen Zustand befindet. Dadurch wird ein seitliches Ausweichen des Befestigungsabschnitts verhindert. Auf der einen Seite wird eine Bewegung durch die Lasche und auf der anderen Seite durch den Nachbarbereich verhindert. Die Beweglichkeit des zweiten Schenkels gegenüber dem ersten Schenkel wird daher so weit eingeschränkt, dass ein versehentliches Lösen erschwert wird. Damit wird der Befestigungsabschnitt zwischen zwei Laschen gehalten, so dass auch eine seitliche Bewegung der beiden Schenkel relativ zueinander ausgeschlossen ist. Der Befestigungsabschnitt wird dann sozusagen symmetrisch gehalten.

Vorzugsweise steht der Befestigungsabschnitt aus dem zweiten Schenkel in Richtung auf den ersten Schenkel vor. Damit wird eine Bewegung der beiden Schenkel in der Richtung vom Schellenmantel zum Ende der Schenkel relativ zueinander zuverlässig verhindert. In eine Richtung stößt dann der zweite Schenkel gegen die Lasche. In der entgegengesetzten Richtung stößt der Befestigungsabschnitt gegen den ersten Schenkel. Da eine Relativbewegung der beiden Schenkel in die Längsrichtung verhindert wird, kann durch eine derartige Relativbewegung ein versehentliches Lösen nicht erfolgen.

Vorzugsweise ist die Außenseite des Befestigungsabschnitts um eine Strecke gegenüber einer Schenkelaußenseite des zweiten Schenkels in Richtung auf den ersten Schenkel versetzt, die einer Dicke der Lasche entspricht. Der Versatz muss dabei nicht exakt mit der Dicke der Lasche übereinstimmen. Mit dieser Ausgestaltung erreicht man aber, daß man an den gegeneinander verriegelten Schenkeln zwei Funktionsflächen erhält, die beide eben sind. Man kann die Schelle dann mit zwei unterschiedlichen Orientierungen montieren, ohne daß Teile vorstehen, die stören.

Bevorzugterweise weist der Befestigungsabschnitt eine Auswölbung auf, die in Richtung auf den ersten Schenkel gerichtet ist. Diese Auswölbung erhöht die mechanische Stabilität des Befestigungsabschnitts. Sie erleichtert darüber hinaus das "Einfädeln" des Befestigungsabschnitts in die Lücke, die von der oder den Laschen begrenzt ist. Darüber hinaus ermöglicht sie, daß man beim plastischen Verformen der Lasche oder der Laschen auf die Außenseite des Befestigungsabschnitts einen kleinen zusätzlichen Formschluß erhält, der das Lösen der Verriegelung weiter erschwert.

Vorzugsweise ist der Befestigungsabschnitt an einer Umfangskante des zweiten Schenkels angeordnet. Bei dieser Umfangskante kann es sich beispielsweise um eine Kante handeln, die am stirnseitigen Ende des zweiten Schenkels angeordnet ist, also an der Position, die soweit wie möglich vom Schellenmantel entfernt ist. Es kann sich aber auch um eine Kante an der Längsseite des Schenkels handeln. In jedem Fall ermöglicht diese Position eine einfache Fertigung. Sowohl der Befestigungsabschnitt als auch die Lasche oder die Laschen sind dann von außen zugänglich, so daß man überflüssige Stanzvorgänge einsparen kann.

Bevorzugterweise weist der zweite Schenkel neben dem Befestigungsabschnitt eine Ausnehmung auf, in die die Lasche im geschlossen Zustand eingeführt ist. Damit ergibt sich auch eine seitliche Begrenzung auf der dem Befestigungsabschnitt gegenüberliegenden Seite der Lasche, so daß mit diesem Merkmal eine weitere Maßnahme geschaffen wird, um die Beweglichkeit der beiden Schenkel gegeneinander zu verringern.

Vorzugsweise weist die Lasche entlang ihrer Längsrichtung einen vorbestimmten Abstand zum ersten Schenkel auf. Damit wird sichergestellt, daß man die Lasche frei, d.h. unbeeinflußt vom ersten Schenkel verformen kann. Es besteht keine Gefahr, daß die Lasche am ersten Schenkel hängenbleibt, was einer Verformung widersprechen würde.

Vorzugsweise ist ein Schenkel rechtwinklig vom Schellenmantel abgebogen, wobei die Schelle im Biegebereich eine Verstärkung durch mindestens eine Sicke aufweist. Der rechtwinklig abgebogene Schenkel wird spätestens bei der Befestigung der Schelle an der Unterlage, beispielsweise einer Wand, einer Decke etc., auf den zweiten Schenkel zu bewegt, wobei dieser Bewegung durch den rohr- oder zylinderförmigen Körper ein gewisser Widerstand entgegengesetzt wird. Dies hat zur Folge, daß der abgebogene Schenkel stark auf Zug belastet wird, was eine erhebliche Beanspruchung des Materials der Schelle bedeutet. Wenn man nun eine Sicke vorsieht, dann wird die Kraft in dem Bereich der Biegung oder des Knicks zwischen der abgebogenen Schelle und dem Schellenmantel kleingehalten und die Kräfte werden gleichförmiger auf den übrigen Umfang der Schelle verteilt.

Vorzugsweise verläuft die Sicke vom Biegebereich aus schräg nach außen. Dies hat zur Folge, daß man unmittelbar im "Knick" oder in der Biegung die Sicke etwas weiter in das Innere (bezogen auf die Breite) der Schelle rücken kann, so daß man nicht auf einen Randbereich der Schelle beschränkt ist. Da die Sicke dann aber von innen nach außen verläuft, stellt man sicher, daß für die Auflage eines Kopfs eines Schraubbolzens genügend Raum verbleibt.

Vorzugsweise verläuft ein Schenkel parallel zu einer Tangente des Schellenmantels und ist um eine vorbestimmte Strecke nach außen versetzt. Eine derartige Ausgestaltung hat insbesondere dann Vorteile, wenn die Schelle in dem Bereich, wo sie den rohr- oder schlauchartigen Körper festhalten soll, mit einem gummiartigen Material versehen ist. Dieses gummiartige Material, beispielsweise aus EPDM, umgreift den Schellenmantel C-förmig, wobei der Rücken des C im Innenraum des Schellenmantels angeordnet ist. Dadurch, daß man nun den tangential verlaufenden Schenkel um eine vorbestimmte Strecke nach außen versetzt, schafft man im Bereich des Schellenmantels genügend Raum, in dem sich der umgriffene Bereich des gummiartigen Materials befinden kann. Man kann dann die Schelle auf der Unterlage festschrauben, ohne daß die Gefahr einer Überpressung des gummiartigen Materials besteht.

Vorzugsweise weicht ein Übergangsbereich zwischen dem Schenkel und dem Schellenmantel mindestens in einem Abschnitt von einer Querrichtung ab. Prinzipiell reicht es zwar aus, den Versatz dadurch zu erzeugen, daß man das Material, aus dem die Schelle gebildet ist, in der Regel ein Streifen aus Blech, im Übergangsbereich S- oder Z-förmig verformt. Wenn man nun diese Verformung nicht gleichförmig über die Querrichtung des Übergangsbereichs vornimmt, sondern diese Verformung beispielsweise V-förmig ausbildet, dann erhält man eine Verstärkungssicke, die eine Erhöhung der Biegesteifigkeit des Schenkels gegenüber im Betrieb entstehenden Belastungen wie Momente und Schwingungen bewirkt. Durch diese Versteifungssicke werden durch Gefügeumwandlungen im Grundwerkstoff an gewählten Stellen Kaltverfestigungen erzielt.

Bevorzugterweise ist mindestens ein Schenkel mit einer Verstärkungsplatte versehen. In den meisten Fällen wird es sogar ausreichen, daß ein einziger Schenkel mit der Verstärkungsplatte versehen ist. Diese Verstärkungsplatte ersetzt dann eine üblicherweise verwendete Unterlegscheibe, die zwischen dem entsprechenden Schenkel und dem Kopf eines Schraubbolzens angeordnet wird, der zum Befestigen der Schelle an einer Unterlage verwendet wird. Die Verstärkungsplatte bringt eine zusätzliche Aussteifung mit sich.

Vorzugsweise ist die Verstärkungsplatte aus einer umgeklappten Verlängerung des Schenkels gebildet. Dies erleichtert die Fertigung. Man muß keine zusätzlichen Teile zur Fertigung zuführen. Vielmehr kann man einen Blechstreifen mit einer entsprechenden Verlängerung fertigen, beispielsweise durch Ausstanzen. Die Verstärkungsplatte wird dann einfach um 180° auf den Rest des Streifens umgeklappt und mit dem Streifen verbunden, so daß der Schenkel mit der Verstärkungsplatte versehen ist.

Hierbei ist bevorzugt, daß die Verstärkungsplatte und der Schenkel eine nietartige Verbindung aufweisen. Eine derartige nietartige Verbindung läßt sich in einer Presse oder Stanze leicht ausführen, so daß man nach dem Umklappen der Verlängerung im Grunde nur noch einen einzigen Arbeitsschritt benötigt, um die Verstärkungsplatte mit dem Schenkel zu verbinden.

Vorzugsweise weist von den beiden Teilen Verstärkungsplatte und Schenkel jedes eine Durchgangsöffnung auf und Material aus einem Teil ist durch die Durchgangsöffnung des anderen Teils verformt. Auf diese Weise ist es möglich, die nietartige Verbindung zu erzeugen. Hierzu kann man beispielsweise die beiden Teile mit unterschiedlich großen Durchgangsöffnungen versehen. Der Rand der kleineren Durchgangsöffnung wird dann in den Innenumfang der größeren Durchgangsöffnung hinein verformt, wodurch sich ein Formschluß ergibt, der eine ausreichende Befestigung sicherstellt.

Hierbei ist bevorzugt, daß die Durchgangsöffnung eine von einer Kreisform abweichende Form aufweist. Damit wird zusätzlich sichergestellt, daß die Verstärkungsplatte, die im übrigen zumindest annähernd die gleiche Form wie der Schenkel aufweist, verdrehfest auf dem Schenkel gesichert ist. Insbesondere gegen Ende eines Einschraubvorganges wirkt ein teilweise erhebliches Moment von dem Schraubenkopf auf die Verstärkungsplatte, die über die von der Kreisform abweichende Form der Durchgangsöffnung in ausreichendem Maße aufgenommen werden kann. Die Durchgangsöffnung kann einfach als Langloch ausgebildet sein. Man kann die Durchgangsöffnung aber auch mit einem polygonartigen Umfangsrand versehen.

Vorzugsweise weist die Verstärkungsplatte an ihrer dem Schellenmantel zugewandten Hinterkante einen abgewinkelten Bereich auf. Damit wird die Verstärkungsplatte an ihrer Hinterkante verstärkt, so daß man Festigkeiten erzielen kann, die denen einer Standardstützscheibe gleich sind, obwohl das Material, das man für die Verstärkungsplatte verwendet, dem des Schellenmantels und der Schenkel entspricht, das normalerweise geringere Festigkeiten aufweist. Man kann die oben erwähnten Sicken dann auch oder nur in dem abgewinkelten Bereich der Verstärkungsplatte anordnen.

Bevorzugterweise überdeckt die Verstärkungsplatte den Befestigungsabschnitt. Dies hat den Vorteil, daß die Verstärkungsplatte verwendet werden kann, um die Lasche oder die Laschen auf die Außenseite des Befestigungsabschnitts herunterzubiegen und plastisch zu verformen. Die Verstärkungsplatte deckt dann die Enden der Lasche ab, so daß auch die Gefahr eines versehentlichen Hängenbleibens und Aufbiegens der Laschen klein gehalten werden kann.

Vorzugsweise weist jeder Schenkel einen Knick auf, wobei im geschlossenen Zustand der eine Schenkel mit seinem Knick im Knick des anderen Schenkels liegt. Damit lassen sich veränderte Montagerichtungen des rohr- oder schlauchförmigen Gegenstandes erreichen.

Die Erfindung wird im folgenden anhand von bevorzugten Ausführungsformen in Verbindung mit der Zeichnung erläutert. Hierin zeigen:
- Fig. 1: eine erste Ausführungsform einer Schelle in nahezu geschlossenem Zustand,
- Fig. 2: die Schelle nach Fig. 1 in geöffnetem Zustand,
- Fig. 3: einen Schnitt III-III aus Fig. 5 einer Verriegelungseinrichtung der Schelle im geöffneten Zustand,
- Fig. 4: den Verriegelungsbereich im geschlossenen Zustand,
- Fig. 5: einen Schnitt V-V nach Fig. 3,
- Fig. 6: einen Streifen zur Herstellung der Schelle nach Fig. 1 und 2,
- Fig. 7: eine zweite Ausführungsform einer Schelle, im geschlossenen Zustand,
- Fig. 8: die Schelle nach Fig. 7 im geöffneten Zustand,
- Fig. 9: eine Ansicht "Y" im geöffneten Zustand,
- Fig. 10: die Ansicht "Y" im geschlossenen Zustand,
- Fig. 11: einen Streifen zur Herstellung der Schelle nach Fig. 7 und 8,
- Fig. 12: eine dritte Ausführungsform einer Schelle,
- Fig. 13: eine Draufsicht auf die Schelle nach Fig. 12,
- Fig. 14: eine vierte Ausführungsform einer Schelle im geöffneten Zustand,
- Fig. 15: die Schelle nach Fig. 14 im geschlossenen Zustand,
- Fig. 16: eine perspektivische Darstellung der Schelle nach Fig. 15,
- Fig. 17: eine fünfte Ausführungsform einer Schelle im geschlossenen Zustand,
- Fig. 18: eine sechste Ausführungsform in perspektivischer Darstellung,
- Fig. 19: die Schelle nach Fig. 18 in Seitenansicht,
- Fig. 20: die Schelle nach Fig. 18 in Draufsicht,
- Fig. 21: eine siebte Ausführungsform einer Schelle im geschlossenen Zustand,
- Fig. 22: die Schelle nach Fig. 21 in Seitenansicht und
- Fig. 23: die Schelle nach Fig. 21 in Draufsicht.

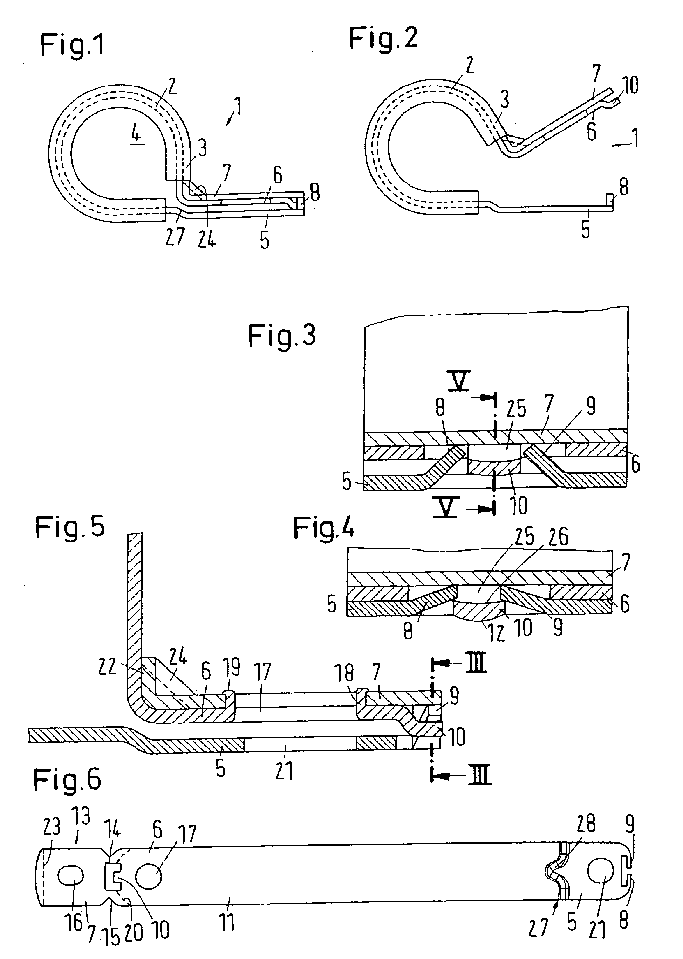

Die Fig. 1 und 2 zeigen eine Schelle 1 mit einem C-förmig gebogenen Schellenmantel 2, der mit einem gummiartigen Material 3, beispielsweise EPDM, umkleidet ist und einen Aufnahmeraum 4 umschließt. Im geschlossenen und nahezu geschlossenen Zustand, der in Fig. 1 dargestellt ist, hat der Aufnahmeraum 4 eine nahezu kreisförmige Umfangswand, so daß im Aufnahmeraum 4 ein rohr- oder schlauchförmiger Gegenstand festgehalten werden kann, wenn die Schelle 1 geschlossen ist.

Die Schelle 1 weist einen ersten Schenkel 5 auf, der sich nahezu geradlinig vom Schellenmantel 2 aus erstreckt. Ferner weist die Schelle einen zweiten Schenkel 6 auf, der gegenüber dem Schellenmantel 2 etwa rechtwinklig abgebogen ist. Auf dem zweiten Schenkel 6, d.h. auf der dem ersten Schenkel 5 abgewandten Seite, ist der zweite Schenkel 6 mit einer Verstärkungsplatte 7 versehen.

Wenn die Schelle 1, wie in Fig. 2 dargestellt ist, geöffnet ist, dann läßt sich die Schelle 1 über den nicht näher dargestellten rohr- oder schlauchförmigen Gegenstand aufschieben. Durch Zusammendrücken der beiden Schenkel 5, 6 wird dann die Schelle 1 auf diesem Gegenstand vorfixiert. Um diese Fixierung aufrechtzuerhalten, weist der erste Schenkel 5 zwei Laschen 8, 9 auf, die in Richtung auf den zweiten Schenkel 6 aus dem ersten Schenkel 5 herausgebogen sind. Wie aus Fig. 6 zu ersehen ist, haben die beiden Laschen 8, 9 entlang ihrer Längserstreckung einen gewissen Abstand zum Rest des ersten Schenkels 5. Sie sind nur an ihren relativ schmalen Stirnseiten mit dem ersten Schenkel 5 verbunden.

Der zweite Schenkel 6 weist einen Befestigungsabschnitt 10 auf, der aus dem zweiten Schenkel 6 in Richtung auf den ersten Schenkel 5 herausgebogen ist und zwar etwa um die Stärke des Blechstreifens 11, aus dem die Schelle 1 gebogen wird.

Der Befestigungsabschnitt 10 weist eine kleine Wölbung 12 auf, die in Richtung auf den ersten Schenkel 5 gerichtet ist, wenn die beiden Schenkel 5, 6 noch voneinander getrennt sind.

Man kann auf die Wölbung des Befestigungsabschnitts 10 aber auch verzichten, um im geschlossenen, also vorfixierten Zustand der Schelle 1 eine vollkommen ebene Montagefläche an der Unterseite (bezogen auf die Darstellung der Fig. 4) zu erhalten.

Die Verstärkungsplatte 7 ist gebildet durch einen Fortsatz 13 des Blechstreifens 11, aus dem die Schelle 1 gefertigt wird. Der Fortsatz 13 ist über einen Gelenkbereich 14 mit dem Blechstreifen 11 verbunden, wobei in dem Gelenkbereich 14 Aussparungen 15 vorgesehen sind, die den Blechstreifen 11 vom Fortsatz 13 trennen, um eine möglichst dünne Materialbrücke zu bilden. Der in Fig. 6 dargestellte Blechstreifen 11 mit Fortsatz 13 kann in einem Stanzvorgang erzeugt werden, wobei die beiden Laschen 8, 9 und der Befestigungsabschnitt 10 ebenfalls erzeugt werden. Danach wird der Fortsatz 13 auf den Blechstreifen 11 umgeklappt, um so die Verstärkungsplatte 7 zu erzeugen. Die Verstärkungsplatte 7 überdeckt dann den Befestigungsabschnitt 10 mit einem Abstand, der ungefähr der Dicke der Laschen 8, 9 entspricht.

Der Fortsatz 13 weist ein Langloch 16 auf. Der Blechstreifen 11 weist eine Durchgangsöffnung 17 auf, die kleiner als das Langloch 16 ist. Wie aus Fig. 5 zu erkennen ist, wird dann ein Ringbereich 18 des zweiten Schenkels 6 durch das Langloch 16 hindurchgeformt, so daß eine Art Nietverbindung gebildet wird. Der Ringbereich 18 kann auch noch einen kleinen Flansch 19 aufweisen, der die Verstärkungsplatte 7 auf ihrer Außenseite übergreift, so daß die Verstärkungsplatte 7 formschlüssig auf dem zweiten Schenkel 6 festgehalten ist.

Sobald die Verbindung zwischen dem zweiten Schenkel 6 und der Verstärkungsplatte 7 erfolgt ist, kann ein Schnitt entlang einer gestrichelten Linie 20 erfolgen, um letztendlich den zweiten Schenkel 6 mit Verstärkungsplatte 7 zu bilden.

Auch im ersten Schenkel 5 ist eine Durchgangsöffnung 21 vorgesehen, die dann, wenn die beiden Schenkel 5, 6 aneinander anliegen, in Überdeckung mit der dann ebenfalls als Langloch ausgebildeten Durchgangsöffnung 17 steht, so daß ein Befestigungselement, beispielsweise eine Schraube, hindurchgeführt werden kann, um die Schelle 1 an einem Träger, einer Decke, einer Wand, einem Gehäuse oder dergleichen befestigen zu können.

Die Verstärkungsplatte 7 weist an ihrem dem Schellenmantel 2 zugewandten Ende einen umgebogenen Abschnitt 22 auf, der zusätzlich als Verstärkung dient. Eine Linie 23 ist in Fig. 6 gestrichelt eingezeichnet, um darzustellen, wo der Abschnitt 22 abgebogen wird.

Der umgebogene Abschnitt 22 kann noch mit Sicken 24 verstärkt sein, um die Biegesteifigkeit des mit Verstärkungsplatte 2 versehenen zweiten Schenkels 6 zu erhöhen. Der umgebogene Abschnitt 22 kann erzeugt werden, bevor oder während die Verstärkungsplatte 7 auf dem zweiten Schenkel 6 umgeklappt wird. Dadurch, daß die Verstärkungsplatte 7 den umgebogenen Abschnitt 22 aufweist, wird vermieden, daß die Verstärkungsplatte 7 eine Kerbwirkung auf den Schenkel 6 ausübt. Es ergibt sich keine scharfe Kante am Ende der Verstärkungsplatte 7, die sich in den Schenkel 6 eingraben könnte, was unter ungünstigen Umständen bei Schwingungen zu einer Sollbruchstelle führen könnte.

Auch mit Verstärkungsplatte 7 läßt sich die komplette Schelle 1 während ihrer Herstellung praktisch als ein Teil handhaben, das aus einem Blechstreifen gestanzt wird. Dies hat erhebliche Vorteile bei der Fertigung.

Um die Schelle 1 an dem nicht näher dargestellten Gegenstand vorzufixieren, werden zunächst die beiden Schenkel 5, 6 soweit aneinander angenähert, wie dies in Fig. 3 zu erkennen ist. Bei der Bewegung, die zu der Darstellung der Fig. 3 geführt hat, ist der Befestigungsabschnitt 10 durch eine Lücke zwischen den beiden Laschen 8, 9 geführt worden. Dabei stoßen die beiden Laschen 8, 9 an die Verstärkungsplatte 7. Eine weitere Bewegung ist zunächst nicht möglich, sondern erst dann, wenn man die beiden Schenkel 5, 6 mit einer größeren Kraft gegeneinander drückt.

Wenn man nun die beiden Schenkel 5, 6 weiter zusammendrückt, beispielsweise unter Zuhilfenahme einer Zange, dann werden die beiden Laschen 8, 9 plastisch umgebogen und in einen Raum 25 hineinverformt, der zwischen der Verstärkungsplatte 7 und dem Befestigungsabschnitt 10 gebildet ist. Damit sind die beiden Schenkel 5, 6 miteinander verriegelt und die Schelle 1 ist vorfixiert.

Wenn man eine Zange zum Zusammendrücken der Schenkel 5, 6 verwendet, dann ist es zweckmäßig, wenn diese Zange an einer Backe einen stiftartigen Vorsprung aufweist, der durch die beiden Durchgangsöffnungen 17, 21 geführt wird. Der Vorsprung stellt dann eine Fixierung der beiden Schenkel 5, 6 relativ zueinander sicher. Gleichzeitig kann diese Zange dann dafür verwendet werden, die beiden Laschen 8, 9 umzubiegen.

Auf die Vorfixierung kann man natürlich auch verzichten, so daß die Schelle 1 als "herkömmliche" Schelle verwendet werden kann. In diesem Fall führt der Werker beim Befestigen der Schelle 1 eine Schraube durch die beiden Durchgangsöffnungen 17, 21 und fixiert die Schelle 1 dann an einer nicht näher dargestellten Unterlage. Bei diesem Befestigungsvorgang werden die Laschen 8, 9 ebenfalls verformt. Dies spielt aber für die weitere Handhabung der Schelle 1 praktisch keine Rolle.

Als Werkzeuge zum Vorfixieren kann man neben einer Flachzange, die manuell betätigt wird, auch eine hilfskraftbetätigte Zange verwenden, die beispielsweise pneumatisch betätigt wird. Bei einer Großserienfertigung kann man auch eine Montagevorrichtung verwenden, die pneumatisch oder hydraulisch betrieben werden kann. Auch eine mechanische Betätigung durch andere Kräfte wäre möglich.

Die Verriegelung verhindert dann eine Bewegung der beiden Schenkel 5, 6 relativ zueinander in praktisch allen Freiheitsgraden. Eine Bewegung der beiden Schenkel 5, 6 über die Anlage aneinander hinaus ist nicht möglich. Eine Bewegung in entgegengesetzter Richtung ist ebenfalls nicht möglich, weil die beiden Laschen 8, 9 formschlüssig auf dem Befestigungsabschnitt 10 festhalten.

Eine Bewegung der beiden Schenkel 5, 6 in Längsrichtung (in Fig. 1 von links nach rechts und von rechts nach links) ist nicht möglich, weil der Befestigungsabschnitt 10 in eine Richtung an den ersten Schenkel 5 stößt und in der anderen Richtung an die Laschen 8, 9. Eine seitliche Bewegung (in Fig. 3 von links nach rechts und von rechts nach links) ist ebenfalls nicht möglich, weil der Befestigungsabschnitt 10 in den Laschen 8, 9 gehalten wird. Ähnliche Überlegungen gelten für mögliche Rotationsbewegungen der beiden Schenkel 5, 6 relativ zueinander.

Der erste Schenkel 5, der zum Schellenmantel 2 annähernd tangential angeordnet ist, ist gegenüber der reinen Tangentenrichtung etwas nach außen versetzt. Ein Übergangsbereich 27 stellt einen Versatz dergestalt sicher, daß das gummiartige Material 3 nicht verpreßt wird, wenn der erste Schenkel 5 fest auf eine Unterlage geschraubt wird.

Wie aus Fig. 6 zu erkennen ist, ist der Übergangsbereich 27 nicht gleichförmig über die Breite des Blechstreifens 11 ausgebildet, sondern er verläuft in Draufsicht V-förmig. Dadurch ist eine Sicke 28 gebildet, die zu einer Aussteifung des Übergangsbereichs 27 beiträgt.

Mit der Ausgestaltung der Schelle, wie sie in den Fig. 1 bis 6 dargestellt ist, stehen auf beiden Seiten der Schenkel 5, 6 ebene Montageflächen zur Verfügung, d.h. der Werker kann bei der Montage frei wählen, in welcher Orientierung er die Schelle 1 montieren möchte. Sowohl die Fläche, die auf der Außenseite des ersten Schenkels 5 gebildet ist, ist eben ausgebildet, ohne daß Teile störend hervorstehen, als auch die Außenseite der Verstärkungsplatte 7. Die Sicke 24 ist dabei dem Schellenmantel 2 so nahe benachbart, daß sie bei einer Montage nicht weiter stört. Die Schelle 1 ist also außerordentlich flexibel einsetzbar. Die Wölbung des Befestigungsabschnitts 10 stört praktisch nicht, da sie nur um wenige Zehntel Millimeter übersteht. Sollte auch dies stören, kann man den Befestigungsabschnitt 10 auch ohne Wölbung ausbilden.

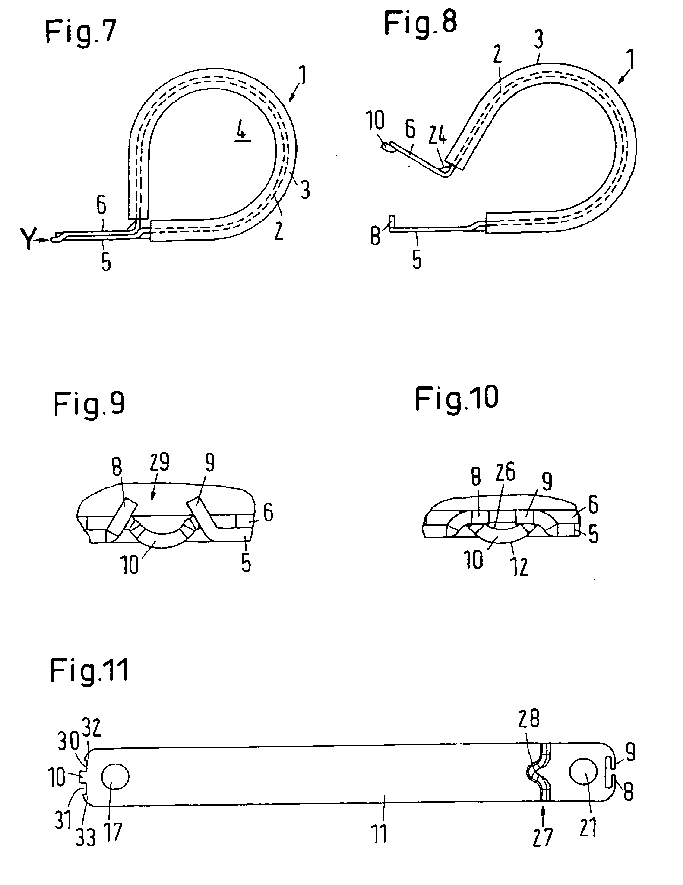

Die Fig. 7 bis 11 zeigen eine abgewandelte Ausführungsform der Schelle 1, bei der die Verstärkungsplatte 7 weggelassen worden ist. Eine derartige Schelle 1 bildet eine leichte Ausführungsform, die man zum Festhalten von leichteren Gegenständen verwenden kann. Leichtere Gegenstände üben geringe Kräfte auf die Schelle 1 aus. Gleiche Elemente sind mit den gleichen Bezugszeichen wie in den Fig. 1 bis 6 versehen.

Im Gegensatz zu der Ausgestaltung nach Fig. 1 bis 6 ist eine Sicke 24 hier unmittelbar in dem Bereich angeordnet, wo der zweite Schenkel 6 vom Schellenmantel 2 abgeknickt ist. Die Sicke 24 hat aber die gleiche Aufgabe, wie die Sicke 24 in Fig. 5.

Wie aus den Fig. 9 und 10 hervorgeht, wird der Befestigungsabschnitt 10 dann, wenn man die beiden Schenkel 5, 6 aufeinanderlegt, durch eine Lücke 29 zwischen den beiden Laschen 8, 9 hindurchgeführt. Danach können die beiden Schenkel 8, 9 auf die Außenseite 26 des Befestigungsabschnitts 10 umgebogen werden, beispielsweise unter Zuhilfenahme einer Zange. Die Zange weist dabei zweckmäßigerweise einen zylindrischen Vorsprung mit abgeschrägter Spitze an einem Zangenschenkel und eine Durchgangsöffnung am anderen Zangenschenkel auf, so daß die beiden Durchgangsöffnungen 17, 21 von dem zylinderförmigen Vorsprung erfaßt werden können und die beiden Schenkel 5, 6 in Position gehalten werden, während die beiden Laschen 8, 9 auf den Befestigungsabschnitt 10 eingebogen werden. Man kann auch hier auf die Wölbung des Befestigungsabschnitts 10 verzichten oder beim Einbiegen der Laschen 9, 10 mit einem geeigneten Werkzeug, beispielsweise einer Zange, die Wölbung wieder geradebiegen.

Auch in dieser Ausgestaltung kann man dafür sorgen, daß sowohl die Außenseite des zweiten Schenkels 6 als auch die Außenseite des ersten Schenkels 5 eben sind, so daß zwei Montageflächen an der Schelle 1 zur Verfügung stehen und die Schelle 1 in beliebiger Orientierung montiert werden kann.

Auch bei der Vorfixierung dieser Schelle 1 verwendet man zweckmäßigerweise eine Flachzange oder ein ähnliches Werkzeug, das zweckmäßigerweise einen stiftartigen Vorsprung aufweist, der durch die beiden Durchgangsöffnungen 17, 21 geführt werden kann, um die beiden Schenkel 5, 6 relativ zueinander so zu positionieren, daß der Befestigungsabschnitt 10 durch die Öffnung zwischen den beiden Laschen 8, 9 geführt werden kann.

Wie insbesondere aus Fig. 11 zu erkennen ist, sind dem Befestigungsabschnitt 10 benachbart zwei Ausnehmungen 30, 31 angeordnet, in die die beiden Laschen 8, 9 eintreten. Die Ausnehmungen 30, 31 sind an ihren Außenseiten durch Vorsprünge 32, 33 begrenzt, so daß eine zusätzliche seitliche Fixierung der beiden Schenkel 5, 6 relativ zueinander erfolgen kann. Die gleiche Ausgestaltung findet sich auch in der Ausführungsform der Fig. 1 bis 6.

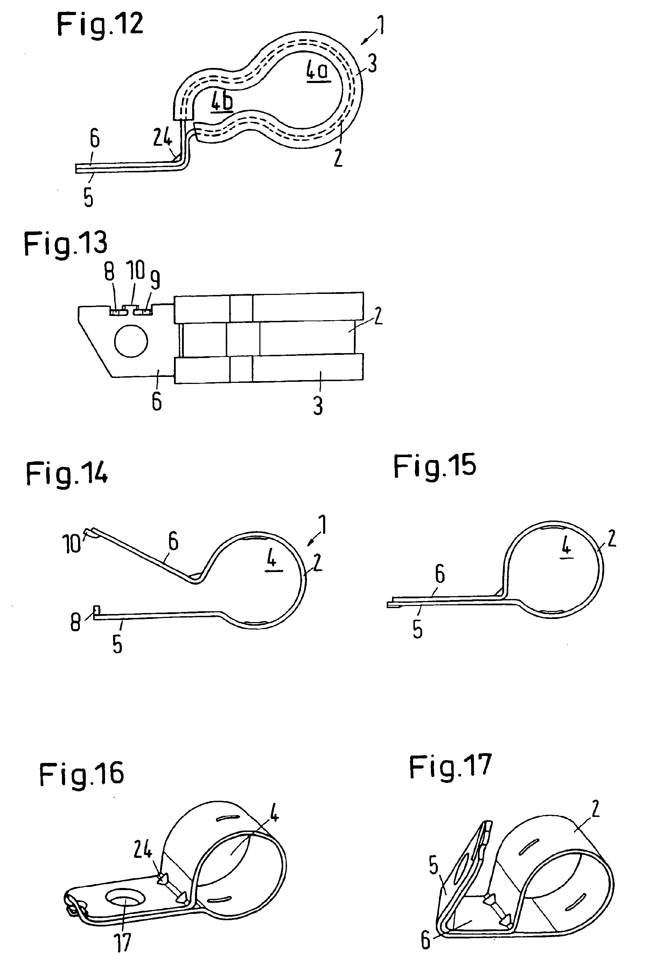

Während bei den beiden in den Fig. 1 bis 11 dargestellten Ausführungsformen die Verriegelung, die durch die Laschen 8, 9 und den Befestigungsabschnitt 10 gebildet ist, an der Stirnseite der beiden Schenkel 5, 6 angeordnet ist, zeigen die Fig. 12 und 13 eine Ausgestaltung, bei der diese Verriegelung mit den Laschen 8, 9 und dem Befestigungsabschnitt 10 an einer Längskante der beiden Schenkel 5, 6 angeordnet ist. Im übrigen sind gleiche und einander entsprechende Elemente mit den gleichen Bezugszeichen versehen.

Die Schelle 1 nach Fig. 12 weist zwei Aufnahmeräume 4a, 4b auf, so daß man mit einer Schelle auch zwei rohr- oder zylinderförmige Gegenstände festhalten kann.

Wie aus Fig. 13 zu erkennen ist, ist das gummiartige Material 3 auf der Außenseite des Schellenmantels 2 nicht geschlossen, sondern es läßt eine Lücke frei, durch die der Schellenmantel 2 sichtbar ist.

Die Fig. 14 bis 16 zeigen eine weitere Ausgestaltung einer Schelle 1, die im Grunde aufgebaut ist wie die Schelle 1 nach den Fig. 7 bis 11. Allerdings ist hier gummiartige Material 3 weggelassen.

In Fig. 17 ist eine Schelle dargestellt, bei der die Schenkel 5, 6 jeweils einen Knick aufweisen, wobei die Knicke so ausgestaltet sind, daß die aneinander anliegenden Schenkel 5, 6 sozusagen gemeinsam geknickt sind. In diesem Fall liegt die Außenseite eines Knicks an der Innenseite des anderen Knicks an.

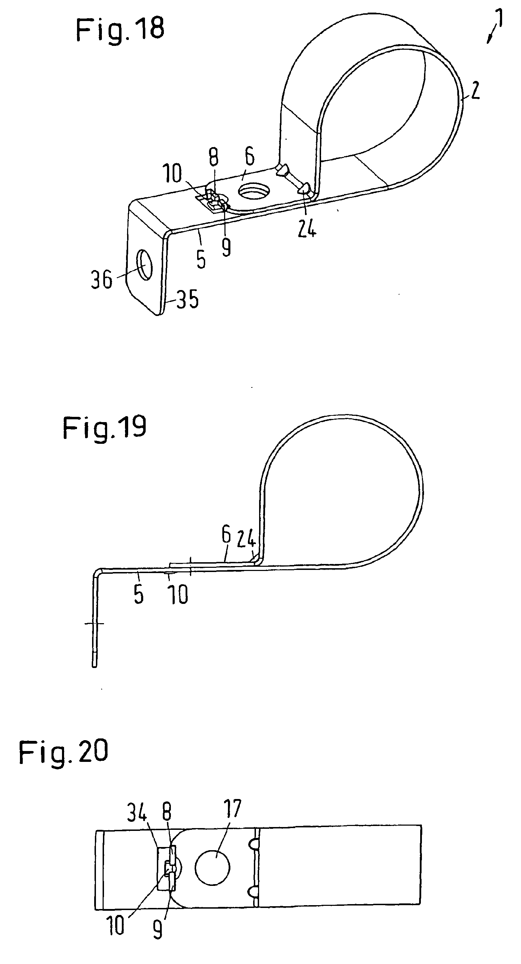

Die Fig. 18 bis 20 zeigen eine sechste Ausführungsform der Schelle 1, bei der gleiche und einander entsprechende Elemente mit den gleichen Bezugszeichen wie in den Fig. 1 bis 17 versehen sind.

Zunächst ist bei der Ausgestaltung nach den Fig. 18 bis 20 der eine Schenkel 5 über den anderen Schenkel 6 hinaus verlängert, d.h. er steht in Längsrichtung über den Schenkel 6 über.

Dementsprechend sind die Laschen 8, 9 nicht an einem Umfangsrand des Schenkels 5 angeordnet, sondern in einer Öffnung 34, die inmitten des Schenkels 5 ausgebildet ist. Im übrigen ist aber die Möglichkeit der Vorfixierung oder Vorverriegelung der Schelle 1 genauso gegeben, wie bei den Schellen der Fig. 1 bis 17.

Die Schelle 1 kann auf zwei Arten an einer Basis befestigt werden. Zum einen sind hier die Durchgangsöffnungen 17, 21 vorgesehen, die beim Vorfixieren der Schelle auch verwendet werden können, um einen Dorn oder stiftartigen Vorsprung an einem Verriegelungswerkzeug aufzunehmen. Zum anderen weist der Schenkel 5 in seinem abgebogenen Abschnitt 35 ein weiteres Loch 36 auf, das ebenfalls verwendet werden kann, um eine Schraube, einen Bolzen oder dergleichen aufzunehmen.

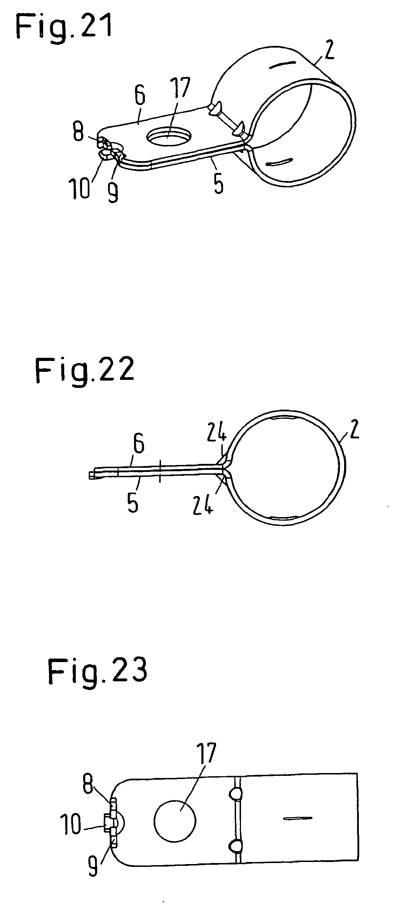

Die Fig. 21 bis 23 zeigen eine siebte Ausführungsform der Schelle, die im wesentlichen der Ausführungsform nach den Fig. 14 bis 16 entspricht.

Allerdings gehen hier beide Schenkel 5, 6 etwa in Radialrichtung vom Schellenmantel 2 ab. In diesem Fall weisen auch beide Schenkel 5, 6 Sicken 24 auf, um eine Aussteifung beim Übergang vom Schellenmantel 2 zu den Schenkeln 5, 6 zu erzielen.

In allen Ausführungsformen läßt sich die Schelle 1 aus einem einzigen Blechstreifen herstellen, so daß man bei der Herstellung praktisch nur ein einziges Teil handhaben muß. Dies gilt auch dann, wenn man die Schelle 1 mit der Verstärkungsplatte 7 versieht. Die Schelle 1 läßt sich in allen Ausführungsformen problemlos vorfixieren, so daß auch die Montage der Schelle 1 stark vereinfacht wird.

## Patentansprüche

1. Schelle (1) zum Befestigen eines rohr- oder schlauchförmigen Gegenstandes an einer Unterlage, wobei die Schelle einen Schellenmantel (2) aufweist, von dessen einem Ende ein erster Schenkel (5) und von dessen anderem Ende ein zweiter Schenkel (6) absteht, wobei im geöffneten Zustand der erste Schenkel (5) mindestens eine in Richtung auf den zweiten Schenkel (6) herausstehende Lasche (8, 9) aufweist und der zweite Schenkel (6) einen Befestigungsabschnitt (10) aufweist, der in eine Lücke (29) zwischen der Lasche (8, 9) und einem der Lasche (8, 9) gegenüberliegenden Nachbarbereich des ersten Schenkels (5) einführbar ist, und im geschlossenen Zustand die Lasche (8, 9) plastisch auf die vom ersten Schenkel (5) abgewandte Außenseite (26) des Befestigungsabschnitts (10) umgeformt ist, **dadurch gekennzeichnet, dass** der Nachbarbereich ebenfalls als Lasche (8, 9) ausgebildet ist, die aus dem ersten Schenkel (5) in Richtung auf den zweiten Schenkel (6) heraussteht und im geschlossenen Zustand plastisch auf die Außenseite (26) des Befestigungsabschnitts (10) umgeformt ist.

2. Schelle nach Anspruch 1, **dadurch gekennzeichnet, dass** der Befestigungsabschnitt (10) aus dem zweiten Schenkel (6) in Richtung auf den ersten Schenkel (5) vorsteht.

3. Schelle nach Anspruch 1 oder 2, **dadurch gekennzeichnet, dass** die Außenseite (26) des Befestigungsabschnitts (10) um eine Strecke gegenüber einer Schenkelaußenseite des zweiten Schenkels (6) in Richtung auf den ersten Schenkel (5) versetzt ist, die einer Dicke der Lasche (8, 9) entspricht.

4. Schelle nach einem der Ansprüche 1 bis 3, **dadurch gekennzeichnet, dass** der Befestigungsabschnitt (10) eine Auswölbung (12) aufweist, die in Richtung auf den ersten Schenkel (5) gerichtet ist.

5. Schelle nach einem der Ansprüche 1 bis 4, **dadurch gekennzeichnet, dass** der Befestigungsabschnitt (10) an einer Umfangskante des zweiten Schenkels (6) angeordnet ist.

6. Schelle nach einem der Ansprüche 1 bis 5, **dadurch gekennzeichnet, dass** der zweite Schenkel (6) neben dem Befestigungsabschnitt (10) eine Ausnehmung (30, 31) aufweist, in die die Lasche (8, 9) im geschlossen Zustand eingeführt ist.

7. Schelle nach einem der Ansprüche 1 bis 6, **dadurch gekennzeichnet, dass** die Lasche (8, 9) entlang ihrer Längsrichtung einen vorbestimmten Abstand zum ersten Schenkel (5) aufweist.

8. Schelle nach einem der Ansprüche 1 bis 7, **dadurch gekennzeichnet, dass** ein Schenkel (6) rechtwinklig vom Schellenmantel (2) abgebogen ist, wobei die Schelle im Biegebereich eine Verstärkung durch mindestens eine Sicke (24) aufweist.

9. Schelle nach Anspruch 8, **dadurch gekennzeichnet, dass** die Sicke (24) vom Biegebereich aus schräg nach außen verläuft.

10. Schelle nach einem der Ansprüche 1 bis 9, **dadurch gekennzeichnet, dass** ein Schenkel (5) parallel zu einer Tangente des Schellenmantels (2) verläuft und um eine vorbestimmte Strecke nach außen versetzt ist.

11. Schelle nach Anspruch 10, **dadurch gekennzeichnet, dass** ein Übergangsbereich (27) zwischen dem Schenkel (5) und dem Schellenmantel (2) mindestens in einem Abschnitt (28) von einer Querrichtung abweicht.

12. Schelle nach einem der Ansprüche 1 bis 11, **dadurch gekennzeichnet, dass** mindestens ein Schenkel (6) mit einer Verstärkungsplatte (7) versehen ist.

13. Schelle nach Anspruch 12, **dadurch gekennzeichnet, dass** die Verstärkungsplatte (7) aus einer umgeklappten Verlängerung (13) des Schenkels (6) gebildet ist.

14. Schelle nach Anspruch 12 oder 13, **dadurch gekennzeichnet, dass** die Verstärkungsplatte (7) und der Schenkel (6) eine nietartige Verbindung (18) aufweisen.

15. Schelle nach Anspruch 14, **dadurch gekennzeichnet, dass** von den beiden Teilen Verstärkungsplatte (7) und Schenkel (6) jedes eine Durchgangsöffnung (16, 17) aufweist und Material aus einem Teil durch die Durchgangsöffnung (16) des anderen Teils verformt ist.

16. Schelle nach Anspruch 15, **dadurch gekennzeichnet, dass** die Durchgangsöffnung (16) eine von einer Kreisform abweichende Form aufweist.

17. Schelle nach einem der Ansprüche 12 bis 16, **dadurch gekennzeichnet, dass** die Verstärkungsplatte (7) an ihrer dem Schellenmantel (2) zugewandte Hinterkante einen abgewinkelten Bereich (22) aufweist.

18. Schelle nach einem der Ansprüche 12 bis 17, **dadurch gekennzeichnet, dass** die Verstärkungsplatte (7) den Befestigungsabschnitt (10) überdeckt.

19. Schelle nach einem der Ansprüche 1 bis 18, **dadurch gekennzeichnet, dass** der Schellenmantel (2) mehrere im Querschnitt kreisförmige Aufnahmeräume (4a, 4b) umgibt.

20. Schelle nach einem der Ansprüche 1 bis 19, **dadurch gekennzeichnet, dass** jeder Schenkel (5, 6) einen Knick aufweist, wobei im geschlossenen Zustand der eine Schenkel mit seinem Knick im Knick des anderen Schenkels liegt.

## Claims

1. Bracket (1) for attaching a tubular or hose-shaped object to a support, the clamp comprising a clamp jacket (2), a first leg projecting from a first end and a second led projecting from a second end of the jacket in an opened state, the first leg (5) having at least one lug (8, 9) projecting in a direction toward the second leg (6), and the second leg (6) having a fastening section (10) insertable into a gap (29) between the at least one lug (8, 9) and an adjacent area of the first leg (5) located opposite the at least one lug (8, 9), wherein, in a closed state, the at least one lug (8, 9) is plastically deformed onto an outer side (26) of the fastening section (10) facing away from the first leg (5), **characterized in that** the adjacent section is as well constructed as lug (8, 9) which protrudes from the first leg (5) in a direction toward the second leg (6), and, in the closed state is plastically deformed onto the outer side (26) of the fastening section (10).

2. Bracket according to claim 1, **characterized in that** the fastening section (10) protrudes from the second leg (6) in a direction toward the first leg (5).

3. Bracket according to claim 1 or 2, **characterized in that** the outer side (26) of the fastening section (10) is offset relative to the outer side of the second leg (6) in a direction toward the first leg (5) by a distance corresponding to a thickness of the lug (8, 9).

4. Bracket according to any of claims 1 to 3, **characterized in that** the fastening section (10) has a curvature (12) directed toward the first leg (5).

5. Bracket according to any of claims 1 to 4, **characterized in that** the fastening section (10) is arranged at a circumferential edge of the second leg (6).

6. Bracket according to any of claims 1 to 5, **characterized in that** the second leg (6) has adjacent the fastening section (10) a recess (30, 31) into which the lug (8, 9) is inserted in the closed state.

7. Bracket according to any of claims 1 to 6, **characterized in that** the lug (8, 9) has along a longitudinal direction thereof a predetermined distance from the first leg (5).

8. Bracket according to any of claims 1 to 7, **characterized in that** a leg (6) is bent at a right angle from the shell jacket (2), wherein the clamp has in a bending area a reinforcement by at least one corrugation (24).

9. Bracket according to claim 8, **characterized in that** the corrugation (24) extends from the bending area obliquely outwardly.

10. Bracket according to any of claims 1 to 9, **characterized in that** one leg (5) extends parallel to a tangent of the clamp jacket (2) and is outwardly offset by a predetermined distance.

11. Bracket according to claim 10, **characterized in that** a transition area (27) between the one leg (5) and the clamp jacket (2) deviates at least along a section (28) from a transverse direction.

12. Bracket according to any of claims 1 to 11, **characterized in that** at least one leg (6) is provided with a reinforcing plate (7).

13. Bracket according to claim 12, wherein the reinforcing plate (7) is formed by a folded over extension (13) of the leg (6).

14. Bracket according to claim 12 or 13, **characterized in that** the reinforcing plate (7) and the leg (6) comprise a rivet-like-connection (18).

15. Bracket according to claim 14, **characterized in that** the reinforcing plate (7) and the leg (6) each has a throughopening (16, 17), and the material of one of the reinforcing plate (7) and the leg (6) is deformed through the throughopening (16) of another of the reinforcing plate (7) and the leg (6).

16. Bracket according to claim 15, **characterized in that** the throughopening (16) has a shape deviating from a circular shape.

17. Bracket according to any of claims 12 to 16, **characterized in that** the reinforcing plate (7) has an angled area at a rear edge thereof which faces the clamp jacket (2).

18. Bracket according to any of claims 12 to 17, **characterized in that** the reinforcing plate (7) bridges over the fastening section (10).

19. Bracket according to any of claims 1 to 18, **characterized in that** the clamp jacket (2) surrounds a plurality of receiving spaces (4a, 4b), whose cross-section is circular.

20. Bracket according to any of claims 1 to 19, **characterized in that** each leg (5, 6) has a bend, wherein, while in the closed state of the clamp, the bend of one leg rests in the bend of the other leg.

## Revendications

1. Collier de serrage (1) pour fixer un objet de forme tubulaire sur une base, dans lequel le collier présente une gaine de collier (2), dont font saillie, à une extrémité, une première branche (5) et, à l'autre extrémité, une seconde branche (6), dans lequel, à l'état ouvert, la première branche (5) présente au moins une patte (8, 9) ressortant dans la direction de la seconde branche (6) et la seconde branche (6) présente une section de fixation (10), qui peut être introduite dans un creux (29) entre la patte (8, 9) et une zone adjacente de la première branche (5) en regard de la patte (8, 9), et, à l'état fermé, la patte (8, 9) est déformée de manière plastique sur le côté externe (26) de la section de fixation (10) opposé à la première branche (5), **caractérisé en ce que** la zone adjacente est également conformée en patte (8, 9), qui fait saillie de la première branche (5) dans la direction de la seconde branche (6) et est déformée, à l'état fermé, de manière plastique sur le côté externe (26) de la section de fixation (10).

2. Collier de serrage selon la revendication 1, **caractérisé en ce que** la section de fixation (10) fait saillie de la seconde branche (6) dans la direction de la première branche (5).

3. Collier de serrage selon la revendication 1 ou la revendication 2, **caractérisé en ce que** le côté externe (26) de la section de fixation (10) est déplacé d'une distance vis-à-vis d'un côté externe de la seconde branche (6) dans la direction de la première branche (5), laquelle distance correspond à l'épaisseur de la patte (8, 9).

4. Collier de serrage selon l'une quelconque des revendications 1 à 3, **caractérisé en ce que** la section de fixation (10) présente un bombement (12), qui est dirigé dans la direction de la première branche (5).

5. Collier de serrage selon l'une quelconque des revendications 1 à 4, **caractérisé en ce que** la section de fixation (10) est aménagée sur une arête périphérique de la seconde branche (6).

6. Collier de serrage selon l'une quelconque des revendications 1 à 5, **caractérisé en ce que** la seconde branche (6) présente à côté de la section de fixation (10) un évidement (30, 31) dans lequel la patte (8, 9) est introduite à l'état fermé.

7. Collier de serrage selon l'une quelconque des revendications 1 à 6, **caractérisé en ce que** la patte (8, 9) présente dans sa direction longitudinale une distance prédéterminée par rapport à la première branche (5).

8. Collier de serrage selon l'une quelconque des revendications 1 à 7, **caractérisé en ce qu'**une branche (6) est repliée à angle droit depuis la gaine (2) du collier, dans lequel le collier présente dans la zone de flexion un renforcement par au moins un bourrelet (24).

9. Collier de serrage selon la revendication 8, **caractérisé en ce que** le bourrelet (24) s'étend de la zone de flexion en oblique vers l'extérieur.

10. Collier de serrage selon l'une quelconque des revendications 1 à 9, **caractérisé en ce qu'**une branche (5) s'étend parallèlement à une tangente de la gaine de collier (2) et est décalée vers l'extérieur d'une distance prédéterminée.

11. Collier de serrage selon la revendication 10, **caractérisé en ce qu'**une zone de transition (27) entre la branche (5) et la gaine de collier (2) s'écarte, au moins dans une section (28), d'une direction transversale.

12. Collier de serrage selon l'une quelconque des revendications 1 à 11, **caractérisé en ce qu'**au moins une branche (6) est pourvue d'une plaque de renforcement (7).

13. Collier de serrage selon la revendication 12, **caractérisé en ce que** la plaque de renforcement (7) est formée d'un prolongement (13) de la branche (6) rabattu.

14. Collier de serrage selon la revendication 12 ou la revendication 13, **caractérisé en ce que** la plaque de renforcement (7) et la branche (6) présentent un joint de type à rivet (18).

15. Collier de serrage selon la revendication 14, **caractérisé en ce que**, entre les deux parties constituées de la plaque de renforcement (7) et là branche (6), chacune présente une ouverture de passage (16, 17) et le matériau d'une partie est déformé par l'ouverture de passage (16) de l'autre partie.

16. Collier de serrage selon la revendication 15, **caractérisé en ce que** l'ouverture de passage (16) présente une forme s'écartant d'une forme circulaire.

17. Collier de serrage selon l'une quelconque des revendications 12 à 16, **caractérisé en ce que** la plaque de renforcement (7) présente une zone repliée (22) sur son arête arrière tournée vers la gaine de collier (2).

18. Collier de serrage selon l'une quelconque des revendications 12 à 17, **caractérisé en ce que** la plaque de renforcement (7) recouvre la section de fixation (10).

19. Collier de serrage selon l'une quelconque des revendications 1 à 18, **caractérisé en ce que** la gaine de collier (2) entoure plusieurs espaces récepteurs (4a, 4b) de forme circulaire en coupe transversale.

20. Collier de serrage selon l'une quelconque des revendications 1 à 19, **caractérisé en ce que** chaque branche (5, 6) présente un coude, dans lequel, à l'état fermé, la première branche se trouve avec son coude dans le coude de l'autre branche.
